**Europäisches Patentamt**

**European Patent Office**

**Office européen des brevets**

(19)

(11) Veröffentlichungsnummer: **0 015 575**
A1

(12) # EUROPÄISCHE PATENTANMELDUNG

(21) Anmeldenummer: 80101177.6

(22) Anmeldetag: 07.03.80

(51) Int. Cl.³: **G 01 B 11/27**

(30) Priorität: 12.03.79 DE 7906881 U

(43) Veröffentlichungstag der Anmeldung: 17.09.80
Patentblatt 80/19

(84) Benannte Vertragsstaaten: **AT BE CH FR GB IT NL SE**

(71) Anmelder: **Krings, Josef, Hans-Böckler-Strasse 28,
D-5138 Heinsberg-Oberbruch (DE)**

(72) Erfinder: **Hillemacher, Helmut, Haagweiher 8,
D-5138 Heinsberg (DE)**

(74) Vertreter: **Rauh, Wolfgang, Dipl.-Ing., Krefelder
Strasse 35, D-5100 Aachen (DE)**

(54) **Lasergerät zum Ausrichten länglicher Bauteile.**

(57) Das erfindungsgemässe Lasergerät besteht im wesentlichen aus einer den Lichtstrahl erzeugenden Röhre (3) und mindestens einer den Lichtstrahl leitenden Optik (4, 13, 14) und dient vorzugsweise zum Ausrichten von Kanalrohren oder dgl. Bauteilen. Abweichend von bisherigen Bauarten bilden Röhre (3) und Optik (4, bzw. 13, 14) nicht eine starre Baueinheit, sondern sind getrennt voneinander angeordnet und durch ein Lichtleiterkabel (6, bzw. 15, 16) miteinander verbunden.

Hierdurch ist es möglich, kürzere Optiken zu verwenden und ihnen insbesondere in engen Rohren einen grösseren Schwenkbereich zu geben.

EP 0 015 575 A1

ACTORUM AG

# LASERGERÄT ZUM AUSRICHTEN LÄNGLICHER BAUTEILE

Die Erfindung betrifft ein Lasergerät zum Ausrichten länglicher Bauteile, insbesondere Rohre oder dgl., mit einer in einer lotrechten und ggf. auch waagerechten Ebene schwenkbaren Lasereinrichtung mit zugehöriger Steuereinrichtung, wobei die Lasereinrichtung im Wesentlichen aus einer den Laserlichtstrahl erzeugenden Röhre und einer den Laserlichtstrahl bildenden Optik besteht.

Für die Ausrichtung von Rohren, insbesondere beim Kanalbau, ist ein Lasergerät bekannt, bei dem die Röhre und die fest mit ihr verbundenen Optik eine starre Einheit bilden, die über geeignete Getriebe einer Steuereinrichtung in einer waagerechten und in einer lotrechten Ebene schwenkbar angeordnet sind. Die Ausbildung der Röhre und der Optik als eine Baueinheit erfordert, daß diese einen recht kräftigen Stahlmantel aufweist, der der Lasereinrichtung die notwendige Festigkeit vermittelt und sie gegen Erschütterungen schützt. Diese Maßnahme bedingt zugleich ein relativ großes Bauvolumen der Baueinheit, ein entsprechend großes Gewicht und eine kräftige Ausführung der zugehörigen Steuereinrichtung. Das relativ große Bauvolumen der Einheit bedingt bei gegebenem, relativ kleinem Rohrdurchmesser des Gehäuses, das in die auszurichtenden Rohre eingesetzt werden muß, daß die tatsächliche Schwenkmöglichkeit der Einrichtung auf ± 1-2° beschränkt ist, selbst dann, wenn die Lagerung und die Steuereinrichtung eine wesentlich größere Auslenkung ermöglichen würden. Man ist somit gezwungen, das ganze Gehäuse zu verstellen, was allgemein unerwünscht ist.

- 2 -

Aus diesem Grund ist das Ausrichten von Rohren bei
Fluchtabweichungen von mehr als 2° mit dem bekannten Gerät ziemlich umständlich.

Der vorliegenden Erfindung liegt die Aufgabe zugrunde, ein Lasergerät zu schaffen, das eine wesentlich weitergehende Schwenkmöglichkeit der Lasereinrichtung bzw. des Laserlichtstrahles ermöglicht, ohne daß das ganze Gehäuse des Geräts mitbewegt werden muß.

Die Lösung dieser Aufgabe besteht gemäß der Erfindung darin, daß die Optik mit dem Austrittsende der
Röhre durch ein biegsames Lichtleiterkabel verbunden ist.

Durch diese Maßnahme ergibt es sich, daß nur noch
die Optik verschwenkt zu werden braucht, während
die Röhre selbst ortsfest im Gehäuse untergebracht
sein kann. Da die Optik selbst relativ kurz ist
und einen geringen Durchmesser haben kann, kann ihr
auch eine erhebliche Schwenkmöglichkeit gegeben
werden, selbst bei geringen Gehäusedurchmessern.
Da außerdem die schwere Armierung der Röhre infolge der geringeren mechanischen Beanspruchung entfällt, kann die Röhre leichter und ggf. auch kleiner ausgeführt werden. Es genügt, sie in einer
Schaumstoffmasse erschütterungsgesichert einzubetten. Auch kann, da die Masse der Optik relativ gering ist, die Steuereinrichtung zierlicher ausgebildet sein und ggf. eine größere Genauigkeit haben.

Wenn auch das Lichtleiterkabel einen relativ hohen
Verlustfaktor hat, so ist doch der mit der Erfindung erzielte Vorteil selbst dann erheblich wertvoller, wenn zum Ausgleich der Verluste eine Röhre mit großer Lichtleistung verwendet wird.

Weitere Ausgestaltungen der Erfindung ergeben sich aus den Unteransprüchen. Nachstehend ist die Erfindung anhand von in der Zeichnung dargestellten Ausführungsbeispielen näher erläutert. Es zeigen:

Fig. 1 eine schematische Seitenansicht eines Lasergeräts nach der Erfindung,

Fig. 2 eine abgewandelte Ausführungsform in Seitenansicht,

Fig. 3 eine weitere Ausführungsform mit zwei Optiken,

Fig. 4 einen lotrechten Längsschnitt durch eine weitere Ausführungsform eines Lasergeräts nach der Linie IV-IV in Fig. 5 und

Fig. 5 einen waagerechten Längsschnitt nach der Linie V-V in Fig. 4.

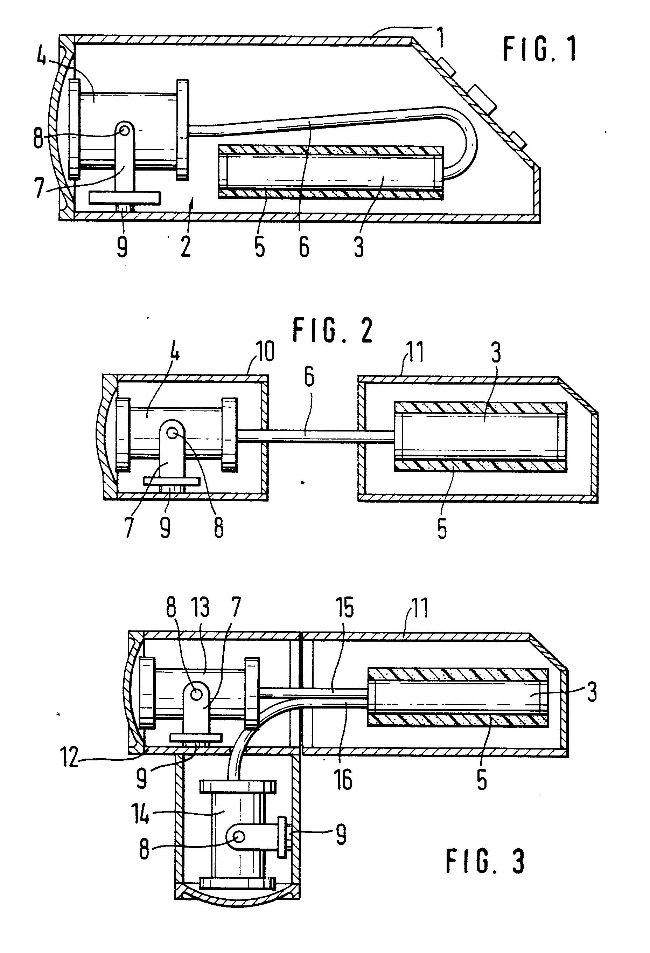

Das in Fig. 1 dargestellte Lasergerät weist in einem etwa zylindrischen, am einen Ende abgeschrägten Gehäuse 1 eine Lasereinrichtung 2 auf, die im Wesentlichen aus einer den Laserlichtstrahl erzeugenden Röhre 3 und einer hiermit verbundenen Optik 4 besteht. Als Verbindungsmittel zwischen der zum Schutz gegen Stöße in einer Schaumstoffpolsterung 5 eingebetteten Röhre 3 und der Optik 4 dient ein biegsames Lichtleiterkabel 6, das z.B. aus in einem Stahlmantel angeordneten Glasfasern besteht. Lichtleiterkabel dieser Art sind bekannt.

Die Optik 4 ist in einer Steuereinrichtung 7 gehalten, die schematisch als eine um eine waagerechte Achse 8 und um eine lotrechte Achse 9 drehbare Halterung dargestellt ist. Da die Steuereinrichtung an sich bekannt ist und selbst nicht Gegenstand der Erfindung ist, erübrigt sich eine ins Einzelne gehen-

BAD ORIGINAL

de Beschreibung.

Da die Röhre 3 im Gehäuse 1 unbeweglich angeordnet ist, kann diese sehr leicht ausgebildet sein. Zum Ausgleich etwaiger Lichtverluste im Lichtleiterkabel 6 kann sie auch eine größere Lichtleistung als übliche Röhren haben.

Fig. 1 läßt erkennen, daß die Optik einen relativ großen Schwenkbereich hat, so daß das Gerät erfolgreich auch bei extremen Bedingungen einsetzbar ist.

Fig. 2 zeigt eine abgewandelte Ausführungsform des Lasergeräts nach der Erfindung. Danach ist für die Optik einerseits und für die Röhre andererseits je ein besonderes Gehäuse 10 bzw. 11 vorgesehen. Dies ermöglicht es, bei besonders engen Rohren oder dgl Einsatzstellen lediglich das Gehäuse 10 mit der Optik 4 aufzustellen und das Gehäuse 11 mit der Röhre 3 den örtlichen Gegebenheiten anzupassen.

Fig. 3 zeigt schematisch eine Möglichkeit, bei der die Röhre 3 in einem Gehäuse 11 untergebracht ist und dieses mit einem Optikgehäuse 12 verbunden ist, in dem zwei rechtwinklig zueinander stehende Optiken 13,14 untergebracht sind, die jeweils über ein Lichtleiterkabel 15,16 gleichzeitig oder nacheinander mit der Röhre 3 verbindbar sind. Gegebenenfalls kann das Gehäuse 12 auch um die Längsachse des Gehäuses 11 drehbar gelagert sein.

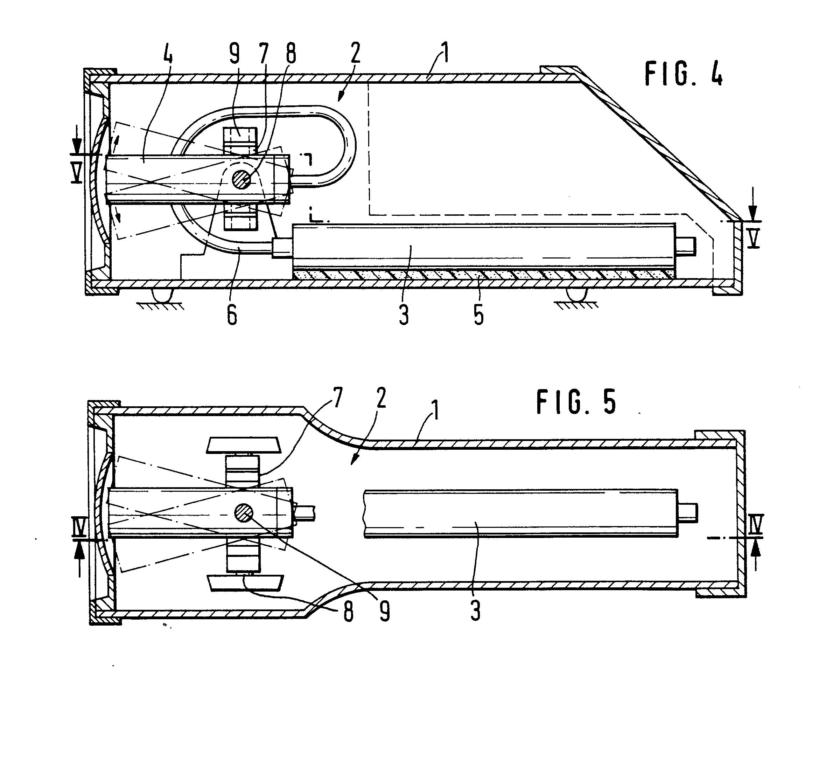

Das in den Fig. 4 und 5 dargestellte Lasergerät entspricht weitgehendedemjenigen nach Fig. 1, hat jedoch eine günstigere Anordnung zwischen Röhre 3 und Optik 4.

BAD ORIGINAL

## PATENTANSPRÜCHE

1. Lasergerät zum Ausrichten länglicher Bauteile, insbesondere Rohren oder dgl., mit einer in einer lotrechten und ggf. auch waagerechten Ebene schwenkbaren Lasereinrichtung mit zugehöriger Steuereinrichtung, wobei die Lasereinrichtung im wesentlichen aus einer den Laserlichtstrahl erzeugenden Röhre und einer den Laserlichtstrahl leitenden Optik besteht, d a d u r c h   g e k e n n z e i c h n e t, daß die Optik (4,13,14) mit dem Austrittsende der Röhre (3) durch ein biegsames Lichtleiterkabel (6,15,16) verbunden ist.

2. Lasergerät nach Anspruch 1, d a d u r c h   g e - k e n n z e i c h n e t, daß mehr als eine Optik (4,13,14) jeweils über ein biegsames Lichtleiterkabel (15,16) mit der Röhre (3) verbunden ist.

3. Lasergerät nach Anspruch 1 oder 2, d a d u r c h   g e k e n n z e i c h n e t, daß das Lichtleiterkabel (6,15,16) aus in einem Metallmantel untergebrachten Glasfasern besteht.

4. Lasergerät nach einem der Ansprüche 1 bis 3, d a d u r c h   g e k e n n z e i c h n e t, daß allein die Optik (4,13,14) schwenkbar angeordnet und mit einer Steuereinrichtung verbunden ist.

5. Lasergerät nach einem der Ansprüche 1 bis 4, d a - d u r c h   g e k e n n z e i c h n e t, daß die Optik (4,13,14) und die Röhre (3) in getrennten Gehäusen (10,11; 12,11) untergebracht sind.

BAD ORIGINAL

0015575

6. Masergerät nach Anspruch 5, d a d u r c h  g e k e n n z e i c h n e t, daß das die Röhre (3) enthaltende Gehäuse (11) ein um seine Längsachse drehbares Gehäuse (12) trägt, in dem zwei zueinander rechtwinklig angeordnete, mit je einem Lichtleiterkabel (15,16) an die gleiche Röhre (3) angeschlossene Optiken (13,14) gehalten sind und daß die Längsachse der einen Optik (13) mit der als Drehachse dienenden Längsachse des die Röhre (3) umschließenden Gehäuses (11) fluchtet.

BAD ORIGINAL

0015575

FIG. 1

FIG. 2

FIG. 3

FIG. 4

FIG. 5

Europäisches
Patentamt

**EUROPÄISCHER RECHERCHENBERICHT**

00155725

Nummer der Anmeldung

EP 80 10 1177

| Kategorie | EINSCHLÄGIGE DOKUMENTE | | KLASSIFIKATION DER ANMELDUNG (Int.Cl. ³) |
|---|---|---|---|
| | Kennzeichnung des Dokuments mit Angabe, soweit erforderlich, der maßgeblichen Teile | betrifft Anspruch | |
| X | GB - A - 1 539 181 (NATIONAL RESEARCH DEVELOPMENT CORP.)<br><br> * Einführung; Figur 1; Seite 3, Zeilen 30-43 *<br><br>-- | 1,4,5 | G 01 B 11/27 |
| X | US - A - 4 003 133 (J.A.F. PIERIK)<br><br> * Einführung; Figuren 1,2; Spalte 4, Zeilen 11-60; Spalte 5, Zeilen 3-13 *<br><br>-- | 1,4,5 | |
| X | FR - A - 2 093 433 (MAGYAR OPTIKAI MÜVEK)<br><br> * Einführung; Seite 5, Zeile 19 bis Seite 7, Zeile 2 *<br><br>-- | 1,4,5 | **RECHERCHIERTE SACHGEBIETE (Int. Cl. ³)**<br><br>G 01 B 11/26<br>11/27<br>5/16 |
| X | DE - A - 2 556 786 (BICC LTD.)<br><br> * Einführung; Seite 8, Absätze 3,4; Figuren 1,2 *<br><br>-- | 3 | |
| | US - A - 3 954 339 (J.G. ATWOOD et al.)<br><br> * Einführung; Figur 1; Spalte 2, Zeilen 1-17 *<br><br>----- | 1,2 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 20-06-1980 | VISSER |

EPA form 1503.1 06.78